# EUROPÄISCHE PATENTSCHRIFT

(11) **EP 3 794 751 B1**
(45) Veröffentlichungstag und Bekanntmachung des Hinweises auf die Patenterteilung: **09.04.2025**
(21) Anmeldenummer: 19719463.2
(22) Anmeldetag: 17.04.2019
(51) Int. Cl.: H04J 3/06, H04J 3/14, H04L 43/08, H04L 12/40, H04L 69/28

(54) **VERFAHREN ZUM BESTIMMEN EINER SYNCHRONISATIONSGENAUIGKEIT, COMPUTERPROGRAMM, KOMMUNIKATIONSEINHEIT UND KRAFTFAHRZEUG**
METHOD FOR DETERMINING SYNCHRONISATION ACCURACY, COMPUTER PROGRAM, COMMUNICATION UNIT AND MOTOR VEHICLE
PROCEDE POUR DETERMINER LA PRECISION DE SYNCHRONISATION, PROGRAMME INFORMATIQUE, UNITE DE COMMUNICATION ET VEHICULE AUTOMOBIL

(30) Priorität: 17.05.2018 DE 102018207684
(43) Veröffentlichungstag der Anmeldung: 24.03.2021
(73) Patentinhaber: VOLKSWAGEN AKTIENGESELLSCHAFT, 38440 Wolfsburg (DE)
(72) Erfinder: MEIER, Alexander, 38442 Wolfsburg (DE); KRIEGER, Olaf, 39291 Lostau (DE)
(86) Internationale Anmeldenummer: PCT/EP2019/059888
(87) Internationale Veröffentlichungsnummer: WO 2019/219316

(56) Entgegenhaltungen:
- WO-A1-2014/138767
- DE-A1- 102014 200 558
- DE-A1- 102014 214 823
- US-A1- 2012 250 704
- US-A1- 2015 236 940
- US-B1- 9 112 630

## Beschreibung

Die vorliegende Erfindung bezieht sich auf ein Verfahren und ein Computerprogramm zum Bestimmen einer Synchronisationsgenauigkeit einer Kommunikationseinheit, eine Kommunikationseinheit und ein Kraftfahrzeug. Die Erfindung bezieht sich ferner auf eine Kommunikationseinheit, die zum Verbinden mit einem Kommunikationskanal ausgestaltet ist.

In Kommunikations- oder Informationssystemen kann es erforderlich sein, eine vertrauenswürdige Zeitsynchronisation zwischen verteilten Komponenten oder Kommunikationseinheiten des jeweiligen Systems zu realisieren, um eine Systemfunktionalität zu gewährleisten. Es kann erforderlich sein, die Zeitsynchronisation bezüglich einer Funktionssicherheit oder einer Manipulationssicherheit vertrauenswürdig zu realisieren. Zum Beispiel ist es möglich, eine zuverlässige oder vertrauenswürdige Zeitsynchronisation mit einem Kommunikationskanal zu erreichen, der zumindest einen Sicherheitsintegritätslevel für Fahrzeuge (engl.: Automotive Safety Integrity Level, ASIL) ASIL B (oder einen höheren Level) aufweist. Ein verwendeter Kommunikationskanal eines Kommunikationssystems, über den die Zeitsynchronisation zwischen Kommunikationseinheiten erfolgt, ist jedoch möglicherweise nicht vertrauenswürdig implementiert, beispielsweise erfüllt er nicht die ASIL B Anforderungen.

Ein Kommunikationssystem kann etwa in Fahrzeugen, z.B. für den Bereich automatisiertes Fahren mit entsprechenden Teilfunktionen wie Sensordatenfusion genutzt werden. Kommunikationseinheiten, die sich zeitlich synchronisieren, können z.B. Steuergeräte oder Sensoren des Fahrzeugs sein.

Eine Möglichkeit, eine vertrauenswürdige Zeitsynchronisation zu realisieren, wäre, jeden verwendeten Kommunikationskanal zwischen den Kommunikationseinheiten durchgängig vertrauenswürdig (etwa gemäß ASIL B) zu implementieren. Diese Möglichkeit ist jedoch kostenintensiv und unter Umständen unwirtschaftlich. Für einige Anwendungsbereiche existieren unter Umständen keine geeigneten Hardwarekomponenten zum Realisieren eines bezüglich der Funktionalitätssicherheit vertrauenswürdigen Kommunikationskanals. Ein Kommunikationskanal mit geringer Vertrauenswürdigkeit kann beispielsweise zu zufälligen Zeitpunkten eine zu hohe zeitliche Verzögerung oder Latenz aufweisen, bei der keine vertrauenswürdige Zeitsynchronisation möglich ist.

In der DE 10 2014 214 823 A1 ist ein Verfahren zur Bestimmung einer zeitlichen Verzögerung vorgeschlagen. Eine erste Komponente stellt einer zweiten Komponente eine erste Nachricht bereit und die zweite Komponente stellt der ersten Komponente eine zweite Nachricht bereit. Die zweite Komponente stellt der ersten Komponente ferner eine dritte Nachricht umfassend eine erste Zeitinformation basierend auf einer Empfangszeit der ersten Nachricht und einer Sendezeit der zweiten Nachricht bereit. Die erste Komponente ermittelt die Verzögerung basierend auf einer Sendezeit der ersten Nachricht, einer Empfangszeit der zweiten Nachricht und der ersten Zeitinformation. Zum Ermitteln der Verzögerung werden drei Nachrichten zwischen den Komponenten gesendet.

Aus der DE 10 2014 217 993 A1 ist ein Verfahren zum Synchronisieren einer Uhr eines Empfängers mit einer Uhr eines Senders bekannt, wobei der Empfänger und der Sender über ein Kommunikationsnetz miteinander verbunden sind. Eine Synchronisationsnachricht wird durch den Sender erzeugt und gesendet und ein exakter Sendezeitpunkt der Synchronisationsnachricht beim tatsächlichen Verlassen des Senders wird mittels der Uhr des Senders erfasst. In einer Folgenachricht des Senders wird der erfasste exakte Sendezeitpunkt der Synchronisationsnachricht an den Empfänger gesendet. Der Sender sendet zum Synchronisieren zwei Nachrichten an den Empfänger.

Aus der US 2012/250 704 A1 ist ein Netzwerknoten zum Übertragen von Daten in einem Netzwerk bekannt. Um ein Synchronisationssignal mit höherer Genauigkeit auszuwählen und dadurch die Genauigkeit der Zeitsynchronisation zu erhöhen, umfasst der Netzwerkknoten eine Netzwerkschnittstelle mit mehreren Ports, ein Übertragungssteuermodul, ein Zeitsynchronisationsmodul, ein Schwankungsmessmodul und eine Uhr. Das Zeitsynchronisationsmodul verwendet ein empfangenes Zeitsynchronisationspaket, um die Uhr zu synchronisieren. Das Schwankungsmessmodul bestimmt eine Genauigkeit einer Zeit, die in dem empfangenen Zeitsynchronisationspaket enthalten ist, basierend auf einem Ergebnis eines Vergleichs zwischen der Zeit, die in dem empfangenen Zeitsynchronisationspaket enthalten ist, und einer Zeit der Uhr.

Aus der US 9 112 630 B1 ist eine Netzwerkvorrichtung bekannt. In der Netzwerkvorrichtung, die über mehrere unterschiedliche Kommunikationspfade kommunikativ mit einer Hauptuhr gekoppelt ist, ist ein Uhrensynchronisationsmodul konfiguriert, um mehrere Pfadzeitdatensätze zu bestimmen, die den mehreren unterschiedlichen Kommunikationspfaden entsprechen, basierend auf Signalen, die von der Hauptuhr über die Vielzahl unterschiedlicher Kommunikationswege zwischen dem Netzwerkgerät und der Hauptuhr empfangen werden. Ein Uhrenmodul ist konfiguriert, um zu bestimmen, dass mindestens einer der mehreren Pfadzeitdatensätze ungenau ist, basierend auf Genauigkeitsmetriken, die den mehreren Pfadzeitdatensätzen entsprechen, und um eine Tageszeit als Funktion eines Restes von einem oder mehreren zu bestimmen mehr Pfadzeitdatensätze in der Mehrzahl von Pfadzeitdatensätzen, die nicht als ungenau bestimmt werden. Das Gerät kann Man-in-the-Middle-Angriffe erkennen und / oder abschwächen, die auf ein Taktsynchronisationsprotokoll abzielen.

DE 10 2014 200558 A1 (BAYERISCHE MOTOREN WERKE AG [DE]) 16. Juli 2015 (2015-07-16) offenbart den Oberbegriff der unabhängigen Ansprüche 1 und 2.

Aufgabe der Erfindung ist es, verbesserte Konzepte für eine Zeitsynchronisation zwischen Kommunikationseinheiten bereitzustellen, die über einen Kommunikationskanal verbunden sind.

Die Aufgabe wird gelöst gemäß den unabhängigen Patentansprüchen. Vorteilhafte Weiterbildungen der Erfindung sind in den abhängigen Patentansprüchen, der folgenden Beschreibung sowie den Figuren beschrieben.

Ein Ausführungsbeispiel der Erfindung betrifft ein Verfahren zum Bestimmen einer Synchronisationsgenauigkeit einer Zeitsynchronisation einer ersten Kommunikationseinheit. Die erste Kommunikationseinheit sendet verfahrensgemäß eine Zeitanfrage an eine zweite Kommunikationseinheit. Die Zeitanfrage wird über einen Kommunikationskanal zu einem korrespondierenden Sendezeitpunkt gesendet. An der ersten Kommunikationseinheit wird nach dem Senden der Zeitanfrage eine Zeitantwort empfangen. Die Zeitantwort kann von der zweiten Kommunikationseinheit gesendet werden, nachdem diese die Zeitanfrage erhalten hat. Die Zeitantwort umfasst eine Synchronisationszeitangabe der zweiten Kommunikationseinheit. Die Zeitantwort wird an der ersten Kommunikationseinheit zu einem korrespondierenden Empfangszeitpunkt empfangen. Basierend auf dem Sendezeitpunkt und dem Empfangszeitpunkt wird die Synchronisationsgenauigkeit bestimmt.

Der Kommunikationskanal kann zu einem System, etwa einem Kommunikationssystem, gehören, das mehrere Kommunikationseinheiten aufweist. Die erste und die zweite Kommunikationseinheit (sowie weitere Kommunikationseinheiten) können mit dem Kommunikationskanal verbunden sein. Beispielsweise sind die erste und die zweite Kommunikationseinheit dazu ausgebildet, gemeinsam eine Systemfunktion zu realisieren, wobei sie zeitlich synchronisiert sein müssen. Die erste und die zweite Kommunikationseinheit weisen jeweils einen lokalen Zeitgeber, beispielsweise eine lokale Uhr auf. Der Zeitgeber kann eine Zeit angeben, oder durch einen Zähler ausgebildet sein, der mit einer vorbestimmten Frequenz monoton steigende Werte ausgibt. Durch die Zeitsynchronisation kann der Zeitgeber der ersten Kommunikationseinheit dem Zeitgeber der zweiten Kommunikationseinheit angepasst werden. Um eine Funktionalität des Systems zu gewährleisten, kann eine zeitliche Synchronisation mit einer vorbestimmten Genauigkeit notwendig sein. Die vorbestimmte Genauigkeit kann in einigen Situationen etwa aufgrund von zeitlichen Verzögerungen bei der Übertragung von Nachrichten auf dem Kommunikationskanal nicht erreicht werden.

Der genutzte Kommunikationskanal kann derart ausgebildet sein, dass nacheinander erfolgte Zeitsynchronisationen der ersten Kommunikationseinheit mit der zweiten Kommunikationseinheit je eine verschiedene Genauigkeit aufweisen. Mit anderen Worten, der Kommunikationskanal kann eine zufällige Schwankung der Synchronisationsgenauigkeit bewirken, etwa weil er nicht vertrauenswürdig ausgebildet ist. Beispielsweise stellt der Kommunikationskanal keine Information darüber bereit, ob er vertrauenswürdig ist und ob er durch eine zeitliche Verzögerung die Genauigkeit der Synchronisation einschränken könnte. Beispielsweise können auf einem nicht vertrauenswürdigen Kommunikationskanal Verzögerungszeiten und somit die Synchronisationsgenauigkeit in Abhängigkeit von einer der ersten Kommunikationseinheit unbekannten Last oder aktuellen Nutzung des Kommunikationskanals variieren.

Mittels des vorgeschlagenen Verfahrens ist es möglich, zu bestimmen, mit welcher Genauigkeit eine Synchronisation erfolgt ist. Somit kann sich der Vorteil ergeben, dass auch auf nicht vertrauenswürdigen Kommunikationskanälen erkannt werden kann, welche Synchronisationsgenauigkeit bei einer Synchronisation erreicht ist. Das Verfahren kann etwa verwendet werden, um zu bestimmen, ob eine vorbestimmte Genauigkeit der Synchronisation erreicht ist oder nicht. Ein Vorteil des vorgestellten Verfahrens kann dabei eine hohe Effizienz sein, da lediglich zwei Nachrichten versendet werden müssen, um die Synchronisationsgenauigkeit zu ermitteln. Ein weiterer Vorteil kann eine erhöhte Manipulationssicherheit sein, da die gesendeten Nachrichten etwa sicher verschlüsselt werden und/oder mit digitalen Signaturen und/oder sicheren Identifikationsmerkmalen versehen werden können, so dass lediglich dafür vorgesehene Nachrichten zur Zeitsynchronisation verwendet werden.

Nach dem Senden der Zeitanfrage kann die erste Kommunikationseinheit eine Zeitantwort der zweiten Kommunikationseinheit mit der Zeitangabe der zweiten Kommunikationseinheit zum Sendezeitpunkt der Zeitantwort empfangen. Der Sendezeitpunkt der Zeitanfrage und der Empfangszeitpunkt der korrespondierenden Zeitantwort können etwa von der oder an der ersten Kommunikationseinheit ermittelt werden. Beispielsweise können Empfangszeitpunkte aller an der ersten Kommunikationseinheit empfangenen Nachrichten direkt beim Empfang ermittelt werden und derjenige Empfangszeitpunkt, der zur Zeitantwort der zweiten Kommunikationseinheit korrespondiert, nach dem Auslesen der Zeitantwort dieser zugeordnet werden. Die Zeitantwort enthält dabei die Synchronisationszeitangabe, z.B. die lokale Uhrzeit der zweiten Kommunikationseinheit. Die erste Kommunikationseinheit kann diese aus der Zeitantwort ermitteln und die lokale Uhrzeit der ersten Kommunikationseinheit der Synchronisationszeitangabe anpassen.

Aus dem Sendezeitpunkt und dem Empfangszeitpunkt kann beispielsweise die erste Kommunikationseinheit dabei die Genauigkeit der Synchronisation ermitteln, beispielsweise einen maximalen Fehler, um den die lokale Uhrzeit der ersten Kommunikationseinheit nach der Synchronisation von der lokalen Uhrzeit der zweiten Kommunikationseinheit abweichen kann.

Zum Bestimmen der Synchronisationsgenauigkeit wird gemäß einem Ausführungsbeispiel aus dem Sendezeitpunkt und dem Empfangszeitpunkt eine Rundlaufzeit (engl.: round trip time) ermittelt. Die Rundlaufzeit ergibt sich insgesamt aus der Zeitdauer, in der die Zeitanfrage über den Kommunikationskanal übermittelt wird, der Dauer, die zwischen Empfangen der Zeitanfrage und Senden der Zeitantwort an der zweiten Kommunikationseinheit vergeht und der Zeitdauer, in der die Zeitantwort über den Kommunikationskanal übermittelt wird. Dabei zeigt die Rundlaufzeit einen maximal möglichen Synchronisationsfehler an und die Synchronisationsgenauigkeit kann basierend auf dem maximalen Synchronisationsfehler ermittelt werden, z.B. durch ein Verhältnis des maximalen Synchronisationsfehlers zu einer zeitlichen Auflösung des Zeitgebers der ersten Kommunikationseinheit. Durch das Ermitteln des Synchronisationsfehlers ist es möglich, diesen zur Zeitsynchronisation zu verwenden, etwa durch Subtrahieren des Synchronisationsfehlers für die Zeitermittlung oder Zeitberechnung an der ersten Kommunikationseinheit basierend auf der Synchronisationszeitangabe. Wenn der Synchronisationsfehler zur Zeitermittlung verwendet wird, geht der Zeitgeber der ersten Kommunikationseinheit gegenüber dem der zweiten Kommunikationseinheit um den Bereich von Null bis maximal zum Synchronisationsfehler nach. Im Gegenzug ist bei Nichtverwendung des Synchronisationsfehlers bekannt, dass der Zeitgeber der ersten Kommunikationseinheit gegenüber dem der zweiten Kommunikationseinheit um den Bereich von Null bis maximal zum Synchronisationsfehler vorgeht. Der Vorteil kann sein, dass der Synchronisationsfehler zur Zeitbestimmung verwendet werden kann und somit der Bereich der maximalen Abweichung (zeitliches Vorgehen oder zeitliches Nachgehen) bekannt ist.

Ein Vorteil des Verfahrens kann darin bestehen, dass unter Verwendung der zur Synchronisation bereits bereitgestellten Nachrichten bestimmt werden kann, um welchen Betrag die Zeitangabe an der ersten Kommunikationseinheit nach der Synchronisation maximal von der Zeitangabe der zweiten Kommunikationseinheit abweichen kann. Somit können die für die Synchronisation relevanten Eigenschaften des Kommunikationskanals, etwa eine aktuelle zeitliche Verzögerung, überwacht und Fehler oder eine aktuelle Unzuverlässigkeit des Kommunikationskanals erkannt werden. Gleichzeitig kann es möglich sein durch das Einfügen von kryptographischen Signaturen in die Zeitanfrage und Zeitantwort mögliche Manipulationen der Zeitsynchronisation zu verhindern.

Beispielsweise kann ein Kommunikationssystem mit zumindest einer ersten und einer zweiten Kommunikationseinheit in einem Fahrzeug bereitgestellt sein. Die Kommunikationseinheiten können über einen Kommunikationskanal des Fahrzeugs, einen CAN (Controller Area Network, dtsch.: Steuergerätenetz)-Bus oder ein Ethernet-Netzwerk, verbunden sein. Die Kommunikationseinheiten können Steuergeräte des Fahrzeugs, Sensoren des Fahrzeugs oder Aktuatoren des Fahrzeugs sein. Zum Beispiel kann sich ein Sensor des Fahrzeugs zeitlich mit einem Steuergerät des Fahrzeugs synchronisieren, damit das Steuergerät Sensordaten des Sensors zum Ausführen einer Funktion nutzen kann.

Gemäß einer Weiterbildung des Verfahrens wird die Synchronisationszeitangabe der zweiten Kommunikationseinheit für ein Ausführen einer Funktion der ersten Kommunikationseinheit in Abhängigkeit von der ermittelten Synchronisationsgenauigkeit verwendet. Für das zuverlässige Ausführen der Funktion kann es notwendig sein, dass eine vorbestimmte Synchronisationsgenauigkeit erreicht ist. Die vorbestimmte Synchronisationsgenauigkeit kann erreicht sein, wenn die Rundlaufzeit kleiner als eine maximale vorbestimmte Zeitdauer ist (beispielsweise kleiner als 5 ms, kleiner als 1 ms, kleiner als 0,5 ms oder kleiner als 0,1 ms). Die Zeitgeber der Kommunikationseinheiten weisen eine begrenzte zeitliche Auflösung auf. Es ist möglich, dass die vorbestimmte Synchronisationsgenauigkeit erreicht ist, wenn die Rundlaufzeit geringer ist als die zeitliche Auflösung des Zeitgebers der ersten Kommunikationseinheit oder maximal dem 2-fachen, 5-fachen oder 10-fachen der zeitlichen Auflösung entspricht.

Gemäß der Weiterbildung ist es z.B. möglich, die Funktion nur dann auszuführen, nachdem eine Synchronisation mit der vorbestimmten Synchronisationsgenauigkeit stattgefunden hat. Beispielsweise wird ein Ausführen der Funktion verhindert, wenn die vorbestimmte Synchronisationsgenauigkeit nicht erreicht ist. Ein Vorteil, der sich dabei ergeben kann, ist, dass z.B. ein Ausführen der Funktion verhindert werden kann, wenn eine zuverlässige Zeitsynchronisation nicht gewährleistet ist. Es ist möglich, dass bei einer ersten Auslastung des Kommunikationskanals die vorbestimmte Synchronisationsgenauigkeit nicht erreicht wird, während bei einer zweiten Auslastung des Kommunikationskanals die vorbestimmte Synchronisationsgenauigkeit erreicht werden kann.

Gemäß einer Weiterbildung des Verfahrens kann infolge einer nicht erreichten vorbestimmten Synchronisationsgenauigkeit eine erneute Zeitanfrage gesendet werden, etwa falls die Synchronisationsgenauigkeit geringer ist als eine für die auszuführende Funktion erforderliche Synchronisationsgenauigkeit. Die erste Kommunikationseinheit kann zumindest eine zweite Zeitanfragen oder weitere Zeitanfragen über den Kommunikationskanal senden, z.B. solange bis die vorbestimmte Synchronisationsgenauigkeit erreicht ist. Zum Beispiel kann bei einem weiteren Synchronisationsvorgang die zweite Auslastung auf dem Kommunikationskanal vorliegen, sodass die vorbestimmte Synchronisationsgenauigkeit erreicht werden kann. Die aus dem weiteren Synchronisationsvorgang ermittelte Synchronisationszeitangabe kann von der ersten Kommunikationseinheit zum Synchronisieren des Zeitgebers verwendet werden und die Funktion kann nach dem weiteren Synchronisationsvorgang ausgeführt werden.

Somit kann sich der Vorteil ergeben, dass Funktionen, die eine vorbestimmte Synchronisationsgenauigkeit zum zuverlässigen Ausführen der Funktion benötigen, auch nach einer über einen beispielsweise bezüglich einer zeitlichen Übertragungsverzögerung schwankenden Kommunikationskanal oder einen nicht zuverlässigen Kommunikationskanal erfolgten Synchronisation zuverlässig ausgeführt werden können. Dies ist beispielsweise nach mehreren durchgeführten Synchronisationen möglich, sobald die vorbestimmte Synchronisationsgenauigkeit erreicht ist, was gemäß einer Ausführungsform geprüft wird. Ein Vorteil des vorgeschlagenen Verfahrens kann somit darin bestehen, dass sich Anforderungen einer Zuverlässigkeit oder Güteanforderungen hinsichtlich einer zuverlässigen Funktionalität nicht auf den Kommunikationskanal übertragen. Ein Vorteil kann in der Möglichkeit der Realisierung einer vertrauenswürdigen Zeitsynchronisation bei Verwendung eines nicht vertrauenswürdigen Kommunikationskanals bestehen, etwa im Fall, dass unter Verwendung des Verfahrens eine genügend hohe Synchronisationsgenauigkeit festgestellt wird. Dadurch können Kosten eingespart werden, da auf ein kostenintensives Realisieren eines vertrauenswürdigen Kommunikationskanals verzichtet werden kann.

In einer Weiterbildung des Verfahrens ist vorgesehen, dass ein aus der Synchronisationsgenauigkeit ermittelter Synchronisationsfehler in Abhängigkeit von der auszuführenden Funktion für die Zeitsynchronisation berücksichtigt wird. Beispielsweise kann der Zeitgeber der ersten Kommunikationseinheit gemäß der Synchronisationszeitangabe eingestellt werden, sodass er gegenüber dem Zeitgeber der zweiten Kommunikationseinheit maximal um den Synchronisationsfehler (beispielsweise die ermittelte Rundlaufzeit) nachgeht. Alternativ kann der Zeitgeber der ersten Kommunikationseinheit gemäß der Synchronisationszeitangabe plus den ermittelten Synchronisationsfehler (beispielsweise der Rundlaufzeit) eingestellt werden, sodass er gegenüber dem Zeitgeber der zweiten Kommunikationseinheit maximal um den Synchronisationsfehler vorgeht. Alternativ kann beispielsweise die Hälfte des ermittelten Synchronisationsfehlers zur Synchronisationszeitangabe addiert werden, um beispielsweise eine Wahrscheinlichkeit zu erhöhen, dass die Zeitangabe der ersten Kommunikationseinheit von der Zeitangabe der zweiten Kommunikationseinheit um einen möglichst geringen Betrag abweicht.

Bei einigen Funktionen kann es vorteilhaft sein, dass der Zeitgeber der ersten Kommunikationseinheit gegenüber der zweiten Kommunikationseinheit vorgeht, während bei anderen Funktionen ein gegenüber der zweiten Kommunikationseinheit zeitliches Nachgehen zu bevorzugen ist. Beispielsweise kann die erste Kommunikationseinheit ein Sensor eines Fahrzeugs sein, der einen Abstand eines Objektes ermittelt, auf das sich das Fahrzeug zubewegt. Die Funktion kann sein, das Fahrzeug zu bremsen, bevor es mit dem Objekt kollidiert. Beispielsweise kollidiert das Fahrzeug dann nicht mit dem Objekt, wenn die Zeitangabe der ersten Kommunikationseinheit vorgeht, da möglicherweise ein größerer als der tatsächliche Abstand zum Objekt bestimmt wird und das Fahrzeug in einem größeren Abstand zum Stillstand gebracht werden kann. Ein Vorteil der Weiterbildung kann darin liegen, den ermittelten Synchronisationsfehler entsprechend einer auszuführenden Funktion zu nutzen.

Gemäß einer Weiterbildung des vorgeschlagenen Verfahrens wird zum Bestimmen der Synchronisationsgenauigkeit eine Zeitdauer zwischen Empfangen der Zeitanfrage und Senden der Zeitantwort an der zweiten Kommunikationseinheit berücksichtigt, die als Verweildauer bezeichnet werden kann. Beispielsweise ermittelt die zweite Kommunikationseinheit den Empfangszeitpunkt der Zeitanfrage. Die zweite Kommunikationseinheit kann aus einem antizipierten oder geplanten Sendezeitpunkt der Zeitantwort die Zeitdauer bestimmen und gemeinsam mit der Synchronisationszeitangabe in der Zeitantwort zur ersten Kommunikationseinheit senden. Beispielsweise weist die zweite Kommunikationseinheit eine hohe funktionale Sicherheit auf, sodass gewährleistet ist, dass die Zeitantwort genau (innerhalb der zeitlichen Auflösung des Zeitgebers) zum geplanten Sendezeitpunkt gesendet wird. Die Verweildauer kann in die Zeitantwort eingefügt werden um etwa vorteilhafterweise der ersten Kommunikationseinheit die Verweildauer in einfacher Weise bereitzustellen. Beispielsweise kann alternativ oder zusätzlich der Empfangszeitpunkt der Zeitanfrage und der Sendezeitpunkt der Zeitantwort in die Zeitantwort eingefügt werden, sodass die Verweildauer an der ersten Kommunikationseinheit ermittelt werden kann. Auf diese Weise kann sich der Vorteil eines schnelleren Sendens der Zeitantwort ergeben. Die erste Kommunikationseinheit kann zum Bestimmen der Synchronisationsgenauigkeit die Verweildauer ermitteln und verwenden. Der Synchronisationsfehler entspricht maximal der Rundlaufzeit abzüglich der Verweildauer. Somit kann vorteilhafterweise der maximale Synchronisationsfehler und damit die Synchronisationsgenauigkeit genauer bestimmt werden.

Gemäß einer Weiterbildung des Verfahrens wird eine Gangungenauigkeit des Zeitgebers der ersten Kommunikationseinheit gegenüber einem Zeitgeber der zweiten Kommunikationseinheit durch Verwenden einer Abweichungsrate kompensiert wird. Die Abweichungsrate wird basierend auf zumindest einem weiteren Senden einer Zeitanfrage und einem korrespondierenden weiteren Empfangen einer Zeitantwort ermittelt. Die Abweichungsrate kann aus einem Verhältnis der Sendezeitpunkte der jeweiligen Zeitantworten zu den Empfangszeitpunkten der jeweiligen Zeitantworten ermittelt werden. Durch das Verwenden der Abweichungsrate kann die Ganggenauigkeit der Zeitbestimmung an der ersten Kommunikationseinheit der zweiten Kommunikationseinheit angepasst werden. Zum Bestimmen der Abweichungsrate ist es möglich, Synchronisationsvorgänge mit einer gleichen Rundlaufzeit und einer gleichen Verweildauer zu verwenden, zum Beispiel können die Rundlaufzeit hin und/oder Verweildauer um weniger als 10 % oder weniger als 5 % voneinander abweichen. Der Vorteil daran kann sein, dass eine Synchronisation zwischen den Kommunikationseinheiten mit einer bestimmten Genauigkeit länger aufrechterhalten werden kann, da die Zeitangaben der beiden Kommunikationseinheiten nicht aufgrund der unterschiedlichen Gangungenauigkeiten auseinanderdriften oder ein zeitliches Auseinanderdriften zumindest verringert ist. Ein Vorteil kann sein, dass zeitliche Synchronisationen dadurch mit einer verringerten Häufigkeit ausgeführt werden müssen.

In einer Weiterbildung des Verfahrens wird eine Mehrzahl von Zeitanfragen von der ersten Kommunikationseinheit über den Kommunikationskanal zu einer entsprechenden Mehrzahl von Kommunikationseinheiten, die zumindest bezüglich eines Sendens der Zeitantwort der zweiten Kommunikationseinheit entsprechend ausgebildet sind, gesendet. Mit anderen Worten, die erste Kommunikationseinheit kann Synchronisationszeitangabe verschiedener Kommunikationseinheiten ermitteln. Beispielsweise führt die erste Kommunikationseinheit zunächst mit einer zweiten Kommunikationseinheit eine Funktion aus. Beispielsweise kann die zweite Kommunikationseinheit zu einem bestimmten Zeitpunkt ausfallen. Eine dritte und eine vierte Kommunikationseinheit, die ebenfalls mit dem Kommunikationskanal verbunden sind können redundant zum Ausführen derselben Funktion ausgelegt sein. Beispielsweise ist die Synchronisationsgenauigkeit der Synchronisation mit der dritten Kommunikationseinheit geringer als die vorbestimmte Synchronisationsgenauigkeit zum Ausführen der Funktion, wohingegen die Synchronisationsgenauigkeit bei der Synchronisation mit der vierten Kommunikationseinheit erreicht ist. Dadurch, dass die erste Kommunikationseinheit bereits die Synchronisationszeitangabe der vierten Kommunikationseinheit ermittelt hat, kann nach Ausfall der zweiten Kommunikationseinheit die Funktion unverzüglich durch die erste Kommunikationseinheit und die vierte Kommunikationseinheit ausgeführt werden. Der Vorteil kann sein, dass durch das Bereitstellen von redundanten Zeitsynchronisationen bei einem auftretenden Ausfallen einer Kommunikationseinheit ein sofortiges Umschalten zu oder Verwenden einer weiteren Kommunikationseinheit möglich ist.

Gemäß einer Weiterbildung des Verfahrens erfolgt bei einer Abweichung der Synchronisationszeitangabe der zweiten Kommunikationseinheit von einer Zeitangabe der ersten Kommunikationseinheit eine Anpassung der Zeitangabe der ersten Kommunikationseinheit an die Synchronisationszeitangabe graduell. Beispielsweise kann die Zeitangabe der ersten Kommunikationseinheit um ein Vielfaches der zeitlichen Auflösung der ersten Kommunikationseinheit von der Synchronisationszeitangabe abweichen. Durch das graduelle Anpassen an die Synchronisationszeitangabe können Unstetigkeiten oder Sprünge der Zeitangabe der ersten Kommunikationseinheit verhindert werden. Beispielsweise kann das graduelle Anpassen innerhalb einer vorbestimmten Zeitdauer erfolgen, etwa innerhalb von 1 ms, von 5 ms, oder innerhalb 1 Sekunde. Beispielsweise kann die Zeitdauer des graduellen Anpassens in Abhängigkeit von der ermittelten Abweichung gewählt werden. Beispielsweise kann die Zeitdauer so gewählt werden, dass die graduelle Anpassung bis zum nächsten Synchronisationsvorgang abgeschlossen ist. Sprünge der Zeitangabe können sich negativ auf einige Funktionen auswirken. Bei Audiofunktionen können Sprünge in der Zeitangabe etwa einen Klirrfaktor erhöhen. Durch die Weiterbildung kann sich der Vorteil ergeben, dass bei der Synchronisation ein Springen der Zeitangabe verhindert wird und somit das Ausführen von Funktionen dadurch nicht beeinträchtigt wird.

In einem Ausführungsbeispiel wird der Zeitanfrage und der Zeitantwort ein jeweiliges Identifikationsmerkmal beigefügt, durch das eine Zeitantwort einer korrespondierenden Zeitanfrage eindeutig zugeordnet wird. Durch das Identifikationsmerkmal kann auch eine Manipulationssicherheit des Verfahrens erhöht werden. Beispielsweise kann das Identifikationsmerkmal vorteilhafterweise kryptographisch verschlüsselt werden, sodass eine Herkunft einer jeweiligen Nachricht sicher authentifiziert werden kann. Beispielsweise können über einen geteilten Kommunikationskanal eine Vielzahl von Zeitanfragen und korrespondierenden Zeitantworten von einer Vielzahl von Kommunikationseinheiten gesendet werden. Die Zeitanfragen können beispielsweise von allen an den Kommunikationskanal angeschlossenen Kommunikationseinheiten empfangen werden. Durch das Identifikationsmerkmal ist es möglich, dass lediglich diejenige Kommunikationseinheit, mit der eine Zeitsynchronisation erfolgen soll, eine Zeitantwort sendet. Beispielsweise empfangen alle Kommunikationseinheiten die gesendete Zeitantwort. Durch das Identifikationsmerkmal ist es der jeweiligen Kommunikationseinheit, die die korrespondierende Zeitanfrage gesendet hat möglich, zu ermitteln, dass die empfangene Zeitantwort zur zuvor gesendeten Zeitanfrage korrespondiert. Der Vorteil kann sein, dass eine Vielzahl von Kommunikationseinheiten über einen geteilten Kommunikationskanal synchronisiert werden können, wobei eine eindeutige Zuordnung der jeweiligen Synchronisationsnachrichten ermöglicht ist.

Gemäß einer Weiterbildung des Verfahrens wird als Kommunikationskanal ein drahtgebundenes Netzwerk verwendet. Das drahtgebundene Netzwerk umfasst zumindest eine Komponente mit einer Funktionssicherheitsstufe, die unterhalb einer von der Funktion der ersten Kommunikationseinheit geforderten Funktionssicherheitsstufe liegt. Beispielsweise ist das drahtgebundene Netzwerk ein CAN-Bus oder ein Ethernet-Netzwerk eines Fahrzeugs oder eines Kraftfahrzeugs. Es ist möglich, dass der Kommunikationskanal eines Fahrzeugs zwischen zwei Kommunikationseinheiten nicht durchgängig eine Funktionssicherheitsstufe aufweist, bei der stets ein zeitliches synchronisieren mit einer vorbestimmten Synchronisationsgenauigkeit gewährleistet wäre, also der Kommunikationskanal mit anderen Worten nicht vertrauenswürdig ist. Der Vorteil kann sein, dass gemäß dem Verfahren ermittelt werden kann, ob bei der Zeitsynchronisation über das drahtgebundene Netzwerk beispielsweise eine erforderliche vorbestimmte Synchronisationsgenauigkeit vorliegt.

Ein Aspekt der Erfindung betrifft ein Verfahren zum Bestimmen einer Synchronisationsgenauigkeit einer Zeitsynchronisation einer ersten Kommunikationseinheit, wobei eine Zeitanfrage von der ersten Kommunikationseinheit zu einem korrespondierenden Empfangszeitpunkt an einer zweiten Kommunikationseinheit empfangen wird. Nach dem Empfangen der Zeitanfrage kann ein Senden einer entsprechenden Zeitantwort zu einem korrespondierenden Sendezeitpunkt von der zweiten Kommunikationseinheit erfolgen, wobei die Zeitantwort eine Information bezüglich des Empfangszeitpunktes und des Sendezeitpunktes umfasst. Beispielsweise stellt die Information bezüglich des Empfangszeitpunktes und des Sendezeitpunktes die zuvor beschriebene Verweildauer dar. Es ist somit möglich, dass die Zeitantwort beispielsweise mit einer Synchronisationszeitangabe für die erste Kommunikationseinheit und einer Verweildauer gesendet wird, sodass die erste Kommunikationseinheit unter Verwendung der Verweildauer die Synchronisationsgenauigkeit genauer ermitteln kann. Die Kommunikationseinheit, welche die Zeitantwort sendet, kann dazu ausgestaltet sein, den Sendezeitpunkt der Zeitantwort vor dem Senden der Zeitantwort festzulegen und die Zeitantwort exakt (beispielsweise exakt hinsichtlich einer zeitlichen Auflösung der Zeitangabe der Kommunikationseinheit) zum festgelegten Sendezeitpunkt an die erste Kommunikationseinheit zu senden. Der Vorteil daran kann sein, dass durch Bereitstellen der Information der Verweildauer die Synchronisationsgenauigkeit präziser ermittelt werden kann.

In einem Ausführungsbeispiel wird die Zeitantwort mit einem Identifikationsmerkmal versehen, das zu einem Identifikationsmerkmal der Zeitanfrage korrespondiert. In anderen Worten, die empfangene Zeitanfrage kann ein Identifikationsmerkmal enthalten und die Kommunikationseinheit kann die Zeitantwort mit einem korrespondierenden Identifikationsmerkmal versenden. Durch die korrespondierenden Identifikationsmerkmale kann es vorteilhafterweise möglich sein, die Zeitantwort der Zeitanfrage zuzuordnen.

Optional wird gemäß einem der vorgeschlagenen Verfahren durch Verwenden zumindest eines kryptographischen Verfahrens eine Manipulationssicherheit der Zeitantwort und/oder der Zeitanfrage erhöht. Die jeweiligen Nachrichten können verschlüsselt werden, sodass nur die jeweilig beteiligten Kommunikationseinheiten den Inhalt der Nachrichten auslesen können. Die Nachrichten können etwa digitale Signaturen aufweisen, die es ermöglichen, lediglich Nachrichten von authentifizierten Kommunikationseinheiten zu nutzen. Beispielsweise kann eine Zeitanfrage an die zweite Kommunikationseinheit gesendet werden, wobei die Zeitanfrage auch von anderen Einheiten empfangen werden kann. Das kryptographische Verfahren kann sicherstellen, dass ausschließlich eine Zeitantwort von der zweiten Kommunikationseinheit zur Synchronisation genutzt wird, wohingegen etwa manipulierte Zeitantworten anderer Einheiten ignoriert werden können. Dazu ist es möglich, dass die Zeitantwort mittels eines symmetrischen oder eines asymmetrischen Verschlüsselungsverfahrens verschlüsselt wird. Beispielsweise sind dazu der ersten Kommunikationseinheit und der zweiten Kommunikationseinheit jeweilige kryptographische Schlüssel der jeweils anderen Kommunikationseinheit bekannt, und/oder auf einem jeweiligen Speicher der Kommunikationseinheiten gespeichert. Zur Erhöhung der Sicherheit kann vorteilhafterweise jedes Synchronisationspaar eigens zugewiesene kryptographische Schlüssel verwenden. Der Zeitantwort und/oder der Zeitanfrage kann eine digitale Signatur angefügt werden, die etwa gemäß einem kryptographischen Verfahren berechnet wurde. Die digitale Signatur ist etwa ein Message Authentication Code (dtsch.: Nachrichtauthentifizierungscode). Beispielsweise kann in gleicher Weise durch ein kryptographisches Verfahren alternativ oder zusätzlich die Manipulationssicherheit der Zeitanfrage erhöht werden.

Alternativ oder zusätzlich kann an die Zeitanfrage und/oder an die Zeitantwort eine Prüfsumme, z.B. an die jeweilige Nachricht angepasst, angehängt werden, mittels derer ermittelt werden kann, ob eine jeweilige Zeitanfrage oder Zeitantwort tatsächlich von der jeweiligen Kommunikationseinheit gesendet wurde. Der Vorteil dabei kann sein, dass eine Manipulationssicherheit des Verfahrens durch das Verwenden von Kryptographie erhöht werden kann.

Ein weiterer Aspekt der vorliegenden Erfindung betrifft ein Computerprogramm zur Durchführung eines der im vorherigen oder nachfolgenden beschriebenen Verfahren. Ein solches Verfahren kann durch das Computerprogramm dann ausgeführt werden, wenn das Computerprogramm beispielsweise auf einem Computer, einem Prozessor, oder einer programmierbaren Hardwarekomponente abläuft.

Die Erfindung umfasst ebenso eine Kommunikationseinheit gemäß einer im Vorherigen oder Nachfolgenden beschriebenen Kommunikationseinheit. Die Kommunikationseinheit kann beispielsweise eine Zeitanfrage versenden und/oder empfangen und/oder eine Zeitantwort versenden und/oder empfangen. Die Kommunikationseinheit ist dazu ausgestaltet, mit einem Kommunikationskanal verbunden zu werden. Die Kommunikationseinheit weist zumindest einen Zeitgeber auf und ist ferner dazu eingerichtet, ein erfindungsgemäßes Verfahren auszuführen. Die Kommunikationseinheit kann beispielsweise ein elektronisches Gerät, ein mobiles Gerät, ein Computer oder ein Handy sein. Die Kommunikationseinheit kann auch ein Sensormodul, ein Steuergerät, eine Recheneinheit oder ein Bordcomputer eines Fahrzeugs sein. Beispielsweise ist die Kommunikationseinheit ein elektronisches Fahrzeugmodul eines Bordnetzes.

Ein Aspekt der Erfindung umfasst ein Kraftfahrzeug mit zumindest einem Kommunikationskanal, wobei das Kraftfahrzeug zumindest eine vorgeschlagene Kommunikationseinheit umfasst. Das Kraftfahrzeug kann ein Fahrzeug im Sinne der vorhergehenden Beschreibung sein. Das Kraftfahrzeug kann ein motorisiertes, mobiles Verkehrsmittel für den Transport von Personen und/oder Gütern sein, beispielsweise ein Landfahrzeug. Das Kraftfahrzeug ist beispielsweise ein Personenkraftwagen, ein Lastkraftwagen oder ein motorisiertes Zweirad. Das Kraftfahrzeug kann insbesondere dazu ausgebildet sein, autonomes und/oder teil-autonomes oder teilautomatisiertes Fahren zu ermöglichen, etwa unter Verwendung von durch Sensoren und/oder Steuergeräten ausgebildeten Kommunikationseinheiten.

Zu der Erfindung gehören auch die Weiterbildungen der erfindungsgemäßen Kommunikationseinheit und des erfindungsgemäßen Kraftfahrzeugs, die eines oder mehrere Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Kommunikationseinheit und des erfindungsgemäßen Kraftfahrzeugs hier nicht noch einmal beschrieben, sondern gelten ebenso für diese als offenbart.

Im Nachfolgenden werden nunmehr Ausführungsbeispiele der vorliegenden Erfindung unter Bezugnahme auf die beigefügten Zeichnungen näher beschrieben. Dazu zeigt:
- Fig. 1: zeigt eine schematische Darstellung eines Verfahrens;
- Fig. 2: zeigt eine schematische Darstellung einer Kommunikationseinheit, die mit einem Kommunikationskanal verbunden ist;
- Fig. 3: zeigt ein Beispiel einer Synchronisation zwischen einem Slave und einem Master;
- Fig. 4a, 4b: zeigen Beispiele von Synchronisationsfehlern bei einer Zeitsynchronisation;
- Fig. 5a, 5b: zeigen Beispiele zur Bestimmung einer Synchronisationsgenauigkeit unter Verwendung einer Verweildauer; und
- Fig. 6: zeigt ein Beispiel eines Verfahrens mit Bestimmung einer Abweichungsrate.

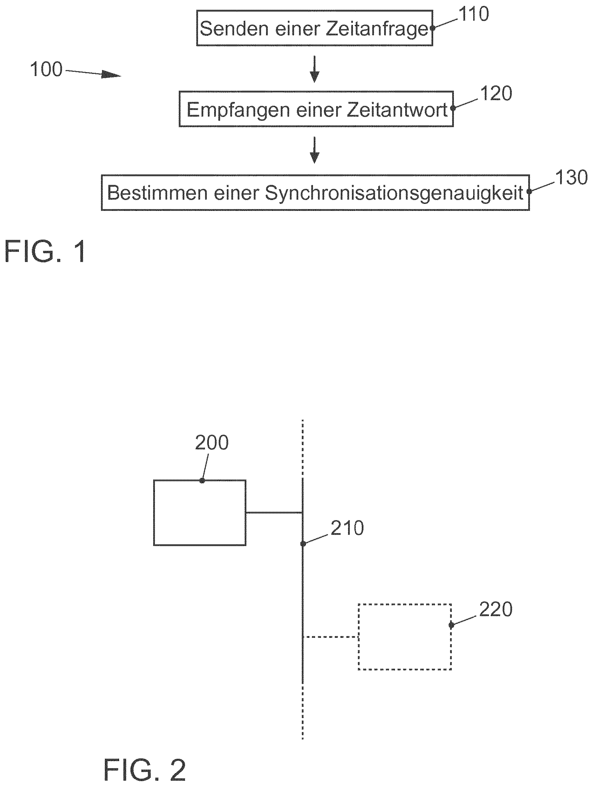

In Fig. 1 ist ein beispielhaftes Flussdiagramm eines Verfahrens 100 zum Bestimmen einer Synchronisationsgenauigkeit einer Zeitsynchronisation einer ersten Kommunikationseinheit dargestellt. Das Verfahren 100 umfasst ein Senden 110 einer Zeitanfrage über einen Kommunikationskanal zu einem korrespondierenden Sendezeitpunkt von der ersten Kommunikationseinheit an eine zweite Kommunikationseinheit und ein korrespondierendes Empfangen 120 einer Zeitantwort zu einem korrespondierenden Empfangszeitpunkt an der ersten Kommunikationseinheit, wobei die Zeitantwort eine Synchronisationszeitangabe der zweiten Kommunikationseinheit umfasst. Das Verfahren 100 umfasst ferner ein Bestimmen 130 der Synchronisationsgenauigkeit basierend auf dem Sendezeitpunkt und dem Empfangszeitpunkt.

Beispielsweise kann das Verfahren 100 in einem Fahrzeug eingesetzt werden. Für Fahrzeugfunktionen wie das automatisierte Fahren und dessen Teilfunktionen (z.B. Sensordatenfusion) kann es erforderlich sein, mehrere Steuergeräte auf eine gleiche Zeitbasis zu synchronisieren. Aus Anforderungen der funktionalen Sicherheit und der Security (dtsch.: Sicherheit, z.B. Manipulationssicherheit) leitet sich ab, dass diese Zeitsynchronisation vertrauenswürdig umgesetzt werden muss, obwohl die Kommunikationskanäle zwischen den betroffenen Steuergeräte z.B. nicht als vertrauenswürdig angesehen werden können. Das bedeutet, dass nicht vorhersagbare Veränderungen oder Verzögerungen auftreten können. Dies kann entweder durch Defizite bei der Implementierung (z.B. keine ASIL-taugliche Implementierung gemäß ISO26262, ISO: Internationale Organisation für Normung) oder mutwillig z.B. durch einen Angriff auf das Fahrzeugnetz erfolgen.

Folglich kann im Sinne der funktionalen Sicherheit die Anforderung bestehen, dass Nicht-Verfügbarkeit einer vertrauenswürdigen Synchronisation innerhalb einer vorgegebenen Zeit ASIL tauglich erkannt werden muss, dass die Synchronisationsgenauigkeit innerhalb eines vorgegeben Bereichs liegen muss und es z.B. in ASIL tauglicher Güte erkennbar sein muss, sofern dies nicht der Fall ist. Dies muss jedoch nicht zwangsläufig bedeuten, dass die Verfügbarkeit der Zeitsynchronisation stets gewährleistet werden kann oder muss.

Im Sinne der Security kann gefordert sein, dass die Zeitsynchronisation dem Schutzziel der Authentizität und der Integrität unterliegt. Das bedeutet z.B., dass durch gezielte Manipulation herbeigeführte Fehler auf dem Kommunikationskanal erkannt werden können.

Ein Vorteil des Verfahrens 100 kann sein, dass sich die Sicherheitsanforderungen nicht auf den Kommunikationskanal übertragen. Somit kann der Kommunikationskanal weniger komplex und/oder kostengünstiger realisiert werden. Stattdessen werden die Eigenschaften des Kommunikationskanals hinsichtlich Übertragungszeit und Verfälschung der übertragenen Inhalte überwacht und auftretende Fehler können erkannt werden. Darüber hinaus besteht die Möglichkeit diese überwachten Eigenschaften an nutzende Funktionen weiterzugeben.

Das erfindungsgemäße Verfahren 100 basiert z.B. auf einem Master-Slave-Prinzip. Das kann bedeuten, dass es eine Rollenverteilung gibt, wonach ein Master (zum Beispiel die zweite Kommunikationseinheit) der Inhaber einer Zeitbasis ist, auf die sich ein oder mehrere Slaves (zum Beispiel eine erste Kommunikationseinheit) synchronisieren.

Fig. 2 zeigt eine schematische Darstellung einer Kommunikationseinheit 200, die mit einem Kommunikationskanal 210 verbunden ist, der in Fig. 2 ausschnittsweise dargestellt ist. Beispielsweise ist die Kommunikationseinheit 200 eine erste Kommunikationseinheit. Optional kann an den Kommunikationskanal 210 eine zweite Kommunikationseinheit 220 angeschlossen sein. Beispielsweise kann eine zeitliche Synchronisation der ersten Kommunikationseinheit 200 an die zweite Kommunikationseinheit 220 erfolgen. Die erste Kommunikationseinheit 200 kann beispielsweise als Slave ihre Zeitangabe an eine Zeitangabe eines Masters anpassen.

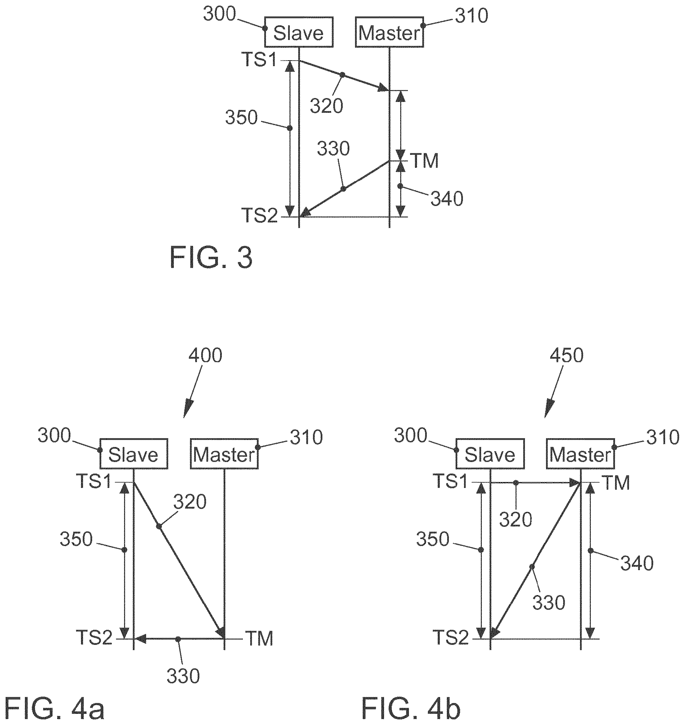

Fig. 3 zeigt dazu ein Beispiel einer Synchronisation zwischen einem Slave 300 und einem Master 310. Master (etwa ein Steuergerät eines Fahrzeugs) und Slave (etwa ein Sensor eines Fahrzeugs) sind über einen Kommunikationskanal (nicht dargestellt) miteinander verbunden. Der Kommunikationskanal kann dabei aus beliebigen Kombinationen aus z.B. geswitchten (dtsch.: geschalteten) Ethernet-Netzwerken, CAN- oder Ethernet-Netzwerken mit Bustopologie, Switches (dtsch.: Schaltern), Router, Gateways o.a. bestehen, wobei eines oder mehrere Elemente aus der Strecke als nicht vertrauenswürdig eingestuft sein können. Die Kommunikationscontroller (z.B. Ethernet MAC (Media Access Control, dtsch. Medienzugangskontrolle)) gelten z.B. als Teil des Kommunikationskanals und sind in erster Instanz z.B. als nicht vertrauenswürdig eingestuft. Es gilt z.B. die Annahme, dass jeder Master und jeder Slave über eine vertrauenswürdige (z.B. ASIL tauglich und manipulationssicher) lokale Uhr verfügt, die z.B. streng monoton steigend ist, eine Taktgenauigkeit in einem vorgegebenen Bereich haben kann (z.B. +-100ppm), eine feinere oder gleiche Auflösung als ein vorgegebener Wert haben kann (z.B. 1ns) und/oder eine größere oder gleiche Ablesegenauigkeit als ein vorgegebener Wert haben kann (z.B. 1ns). Des Weiteren gilt z.B. die Annahme, dass die erforderliche Software im Master und den Slaves vertrauenswürdig (ASIL tauglich und manipulationssicher) umgesetzt ist.

Das Verfahren 100 basiert auf dem Challenge-Response-Prinzip, wonach jeder Slave (z.B. Slave 300) in einem vorgegebenen Intervall periodisch eine Zeitanfrage 320 (oder ein Request 320, dtsch.: Anfrage) an den Master 310 schickt, wobei der Master 310 auf den Request 320 mit einer Zeitantwort 330 (oder eine Response 330, dtsch.: Antwort) antwortet. Der Request 320 kann zu einem Sendezeitpunkt TS1 vom Slave 300 gesendet werden und die Response 330 kann zu einem Empfangszeitpunkt TS2 am Slave 300 empfangen werden.

Die resultierende Response 330 ist etwa derart gestaltet, dass der Slave 300 sie eindeutig dem verursachenden Request 320 zuordnen kann (etwa mittels eines Identifikationsmerkmals). Dies liegt darin begründet, dass nicht ausgeschlossen werden kann, dass ein Request oder eine Response bei einem nicht vertrauenswürdigen Kommunikationskanal beliebig lange verzögert wird. Dies kann beispielsweise dadurch realisiert werden, dass jeder Request einen Identifier (Identifikationsmerkmal) enthält, bei dem sichergestellt ist, dass dieser pro Slave innerhalb eines Fahrzyklus (wenn das Verfahren 100 z.B. in einem Fahrzeug angewendet wird) nur einmalig verwendet wird oder dass es hinreichend unwahrscheinlich ist, dass dieser mehr als einmal verwendet wird. Der Master kann diesen Identifier aus dem Request in die Response übernehmen und zusätzlich eine ''XOR"(exklusives oder)-Operation mit einem eindeutigen individuellen Wert auf diese anwenden, wobei sichergestellt werden kann, dass dieser Wert (ggf. ausschließlich) den beiden beteiligten Teilnehmern bekannt ist. Dies beugt z.B. dem Fall vor, dass durch einen Fehler des Kommunikationskanals unbeabsichtigt eine scheinbar gültige Response auf einen Request erzeugt wird.

Darüber hinaus kann etwa durch eine Erweiterung des zuvor beschriebenen Verfahrens die Authentizität des Masters 310 und/oder die Integrität der Nachricht, etwa der Response 330 gewährleistet werden. Dies wird dadurch realisiert, dass der Master 310 über den kompletten Inhalt der Response 330 mit Hilfe eines geeigneten kryptografischen Verfahrens eine digitale Signatur berechnet, welche an die Response 330 angehängt wird (z.B. ein Message Authentication Code, dtsch.: Nachrichtenauthentifizierungscode). Da z.B. nur der Master 310 und je nach Verfahren auch der Slave 300 das zugrundeliegende Geheimnis kennt, kann der Slave 300 den Master z.B. eindeutig als Sender der Response identifiziert werden bzw. erkannt werden, ob die Response 330 bei der Übertragung über den nicht vertrauenswürdigen Kommunikationskanal mutwillig verändert wurde. Eine vorteilhafte Umsetzung des Verfahrens könnte neben anderen AES (Advanced Encryption Standard, dtsch.: erweiterter Verschlüsselungsstandard)-256 als kryptografisches Verfahren zur Berechnung der digitalen Signaturen verwenden. Bei Einsatz eines symmetrischen kryptografischen Verfahrens kann es empfehlenswert sein, pro Master-Slave-Paar ein eigenes Geheimnis (Schlüssel) zu verwenden. Die Authentizität und Integrität des Request 320 kann optional nach dem gleichen Verfahren sichergestellt werden.

Manchmal kann das eingesetzte kryptografische Verfahren nicht geeignet sein, die Unverfälschtheit der Inhalte der Nachrichten (beispielsweise der Zeitantwort und der Zeitanfrage) im Sinne der funktionalen Sicherheit sicherzustellen. Dann kann z.B. zusätzlich eine CRC (cyclic redundancy check, dtsch.: zyklische Redundanzprüfung) Checksumme über die Inhalte der Nachrichten berechnet und an die Botschaft angehängt werden. Sofern gar keine digitale Signatur verwendet wird, kann die Verwendung der Prüfsumme für die Erreichung der Ziele der funktionalen Sicherheit unerlässlich sein. Sofern keine Prüfsumme verwendet wird, kann ein Feld "Prüfsumme" im Request und in der Response mit der Information ''0x00" befüllt werden. Sofern keine digitale Signatur verwendet wird, kann ein Feld ''Signatur" im Request und in der Response mit ''0x00" befüllt.

Der Master 310 kann einen Zeitstempel TM (etwa als Synchronisationszeitangabe) auf seinem Zeitgeber, etwa einer lokalen vertrauenswürdigen Uhr, zum spätest möglichen Zeitpunkt, bevor er die Response 330 verschickt, erfassen, und fügt z.B. diesen Zeitstempel in geeigneter Darstellung in die Response 330 ein (z.B. 64bit Nanosekundenzähler seit Start). Es kann sichergestellt werden, dass der Wert des Zeitstempels TM unter Berücksichtigung der Auflösung und der Ablesegenauigkeit der lokalen Uhr des Masters z.B. vor dem Zeitpunkt liegt, zu dem die Response versendet wird.

Für eine Zeitsynchronisation kann es erforderlich sein, ein Ereignis zu erzeugen, welches von allen Synchronisationspartnern beobachtet werden kann, wobei der Master 310 dem Slave 300 mitteilt, zu welcher Zeit nach seiner lokalen Uhr das Ereignis stattgefunden hat und der Slave 300 ebenfalls festhält, zu welchem Zeitpunkt nach seiner lokalen Uhr das Ereignis beobachtet wurde. Bei einer Zeitsynchronisation über einen Kommunikationskanal stellt das Ereignis typischerweise das Übertragen einer Botschaft dar, welches in diesem Falle die Response 330 des Masters 310 ist. Dabei ist es möglich, dass der Slave 300 das Ereignis (Empfang der Response) um eine unbekannte Laufzeit 340 (Response Network Delay, dtsch. Netzwerkverzögerung der Antwort) über den nicht vertrauenswürdigen Kommunikationskanal verzögert wahrnimmt. Das Response Network Delay 340 ist die tatsächliche Zeitdauer zwischen Absenden der Response und Empfangen der Response.

Das Response Network Delay bei einem nicht vertrauenswürdigen Kommunikationskanal kann theoretisch beliebig groß werden. Das Response Network Delay kann eine Ursache des Synchronisationsfehlers sein. Das Response Network Delay kann selbst z.B. nicht ohne weiteres durch den Slave 300 bestimmt werden. Stattdessen erfasst der Slave zum spätest möglichen Zeitpunkt vor dem Senden des Request den Zeitstempel TS1 nach seiner lokalen Uhr, sowie den Zeitstempel TS2 zum frühest möglichen Zeitpunkt nach Empfang der Response. Aus den Zeitstempeln TS2 und TS1 berechnet der Slave eine Round Trip Time 350 (dtsch. Rundlaufzeit) und trifft die Annahme, dass das Response Network Delay 340 immer kleiner oder maximal gleich der Round Trip Time 350 ist.

Fig. 4a und 4b zeigen Beispiele 400, 450 von Synchronisationsfehlern, die etwa durch das Response Network Delay 340 auftreten können, bei einer Zeitsynchronisation.

Mit Hilfe der drei Zeitinformationen TS1, TS2 und TM kann der Slave 300 folgende lineare Interpolationsfunktion bilden, die es ihm erlaubt, zu einem beliebigen Zeitpunkt (ts, time Slave, dtsch. Slave-Zeit) gemäß seiner lokalen Uhr die Zeit nach der Uhr des Masters (tm, time Master, dtsch. Master-Zeit) zu berechnen: tm(ts)= (ts - TS2) + TM - RND. Dabei kann der Slave jedoch keine Aussage darüber treffen, zu welchem Zeitpunkt TM innerhalb des Intervalls TS1 bis TS2 erfasst wurde, was in einer ersten Extremfallbetrachtung gemäß Beispiel 450 zu der Annahme führt, dass Response Network Delay 340 gleich der Round Trip Time 350 ist. Das bedeutet, dass TM zeitgleich mit TS1 erfasst worden ist. Ein anderer denkbarer Extremfall wäre gemäß Beispiel 400, dass das Response Network Delay (dort nicht dargestellt) den Wert 0 annimmt und TM zeitgleich mit TS2 erfasst wurde. Daraus ergeben sich die folgenden zwei Interpolationsfunktionen, deren Ergebnis sich um die Round Trip Time (TS2-TS1) unterscheiden, was gleichzeitig auch eine maximale Abweichung bzw. einen maximalen Synchronisationsfehler, z.B. den Worst Case Error (dtsch. Fehler im schlechtesten Fall) darstellt. Gemäß Beispiel 450 kann sich ein maximales Response Network Delay (RND_MAX) gleich der Round Trip Time (RTT) ergeben. Gemäß Beispiel 400 kann sich ein minimales Response Network Delay (RND_MIN) von 0 ergeben. Der Worst Case Error entspricht somit der Round Trip Time RTT.

Theoretisch kann der Slave 300 für die lineare Interpolationsfunktion jeden beliebigen Wert für das Response Network Delay (RND) aus dem Intervall 0 bis RTT wählen und kann dadurch z.B. die Lage des Fehlers bestimmen (z.B. in Abhängigkeit einer auszuführenden Funktion). Verwendet der Slave 300 den Wert 0, bewirkt dies, dass seine synchronisierte Uhr um 0 bis maximal RTT gegenüber dem Master 310 vorgeht. Verwendet der Slave 300 alternativ den Wert RTT bewirkt dies, dass seine synchronisierte Uhr um 0 bis maximal RTT gegenüber dem Master 310 nachgeht. In Abhängigkeit der Anforderungen der Funktionen, die die Zeitsynchronisation verwenden, ist es möglich, den Wert für RND geeignet festzulegen. Um eine geforderte Synchronisationsgenauigkeit auf vertrauenswürdige Art und Weise zu erreichen muss die Round Trip Time z.B. kleiner oder gleich als ein vorgegebener Grenzwert RTT_MAX sein, z.B. 5ms. Sofern die Round Trip Time den Wert von RTT_MAX überschreitet, kann der nutzenden Funktion signalisiert werden, dass die Zeitsynchronisation zu dem gegebenen Zeitpunkt nicht die geforderten Eigenschaften (bzgl. Genauigkeit) zur Verfügung stellen kann. Alternativ kann die Zeitsynchronisation der nutzenden Funktion zusätzlich die aktuelle Synchronisationsgenauigkeit (Worst Case Error) in Form der Round Trip Time zur Verfügung stellen. Dadurch kann das resultierende Verhalten mit durch die nutzende Funktion bestimmt werden, wobei unterschiedliche Funktionen etwa unterschiedliches Verhalten realisieren können. In einem Beispiel kann TS1 10 ms (Zeitangabe des Slave 300) entsprechen, TS2 12 ms (Zeitangabe des Slave 300) und TM 16 ms (Zeitangabe des Master 310) entsprechen. Der Slave 300 kann die Masterzeit wie folgt berechnen: tm(13 ms)= (13 ms - 12 ms) + 16 ms - RND. In einem ersten Extremfall kann tm(13 ms) = (13 ms - 12 ms) + 16 ms - 2 ms = 15 ms sein (bei Berücksichtigung eines Worst Case Error von 2 ms. In einem zweiten Extremfall kann tm(13 ms) = (13 ms - 12 ms) + 16 ms - 0 ms = 17 ms sein. Es kann eine Ungenauigkeit von 2 ms auftreten.

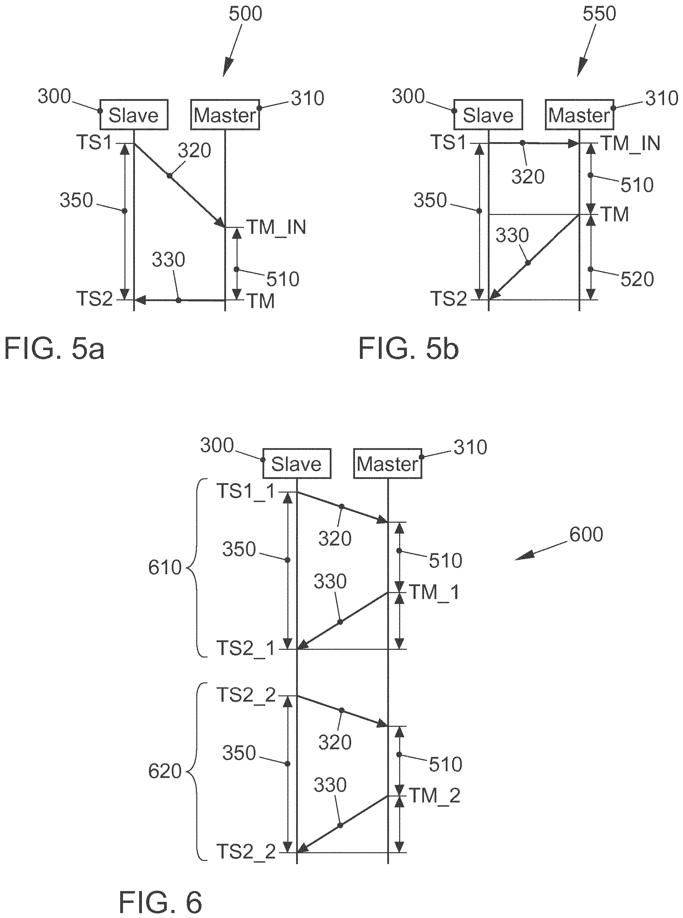

Fig. 5a und 5b zeigen Beispiele 500, 550 zur Bestimmung einer Synchronisationsgenauigkeit unter Verwendung einer Verweildauer 510. In einer möglichen Variante des Verfahrens kann die Synchronisationsgenauigkeit verbessern werden (z.B. der Worst Case Error verringert werden), in dem der Master 310 zusätzlich einen Zeitstempel TM_IN zum frühest möglichen Zeitpunkt nach Empfang des Request 320 aufnimmt. Diesen Zeitstempel TM_IM integriert der Master in seine Response 330 und ermöglicht es so dem Slave, die Verweildauer 510, etwa die Master Residence Time (MRT, dtsch. Master-Verweilzeit) zu bestimmen, die der Master z.B. als Verarbeitungszeit für den Request 330 benötigt hat. Dabei kann MRT = TM - TM_IN sein.

Sofern dem Slave 300 die Master Residence Time 510 bekannt ist, kann er die Annahme für das Response Network Delay treffen, dass das Response Network Delay nicht größer als RTT - MRT sein kann. Diese Annahme leitet sich aus einer analogen Extremfallbetrachtung ab. Dadurch verbessert sich die Bestimmung der Synchronisationsgenauigkeit um den Wert MRT. Gemäß Beispiel 550 ist das maximale Response Network Delay 520 (RND_MAX) = RTT - MRT. Gemäß Beispiel 500 ist das minimale Response Network Delay (RND_MIN) = 0. Der Worst Case Error kann somit durch RTT 350 - MRT 510 bestimmt werden. In einem Beispiel kann TS1 am Slave 300 10 ms und TS2 am Slave 300 12 ms sein und TM_IN am Master 310 15 ms und TM am Master 310 16 ms sein. Der Slave 300 kann damit z.B. tm(13 ms) = (13 ms - 12 ms) + 16 ms - RND berechnen. Für MRT 510 kann gelten: 16 ms - 15 ms= 1 ms. Gemäß Beispiel 550 wäre tm(13 ms) = (13 ms - 12 ms) + 16 ms - 1 ms = 16 ms. Gemäß Beispiel 500 wäre tm(13 ms) = (13 ms - 12 ms) + 16 ms - 0 ms = 17 ms. Damit kann ein Worst Case Error und somit die Ungenauigkeit der Synchronisation etwa vorteilhafterweise auf 1 ms reduziert bestimmt werden. Die Synchronisationsgenauigkeit kann also genauer bestimmt werden.

Fig. 6 zeigt ein Beispiel eines Verfahrens zur Bestimmung 600 einer Abweichungsrate. Die Uhren im Master 310 und Slave 300 können jeweils eine begrenzte Taktgenauigkeit haben (z.B. 100ppm). Es kann der Wunsch bestehen, dass sich die Uhren in den Slaves möglichst genau wie die Uhr im Master verhalten. Um dies zu erreichen, können die Slaves zunächst den Unterschied zwischen ihrem eigenen Takt und dem Takt des Masters ermitteln. Im zweiten Schritt können die Slaves ihren eigenen Takt an den durch den Unterschied ermittelten Takt des Masters anpassen. Es besteht die Möglichkeit, aus den Zeitstempeln aus zwei Synchronisationsintervallen 610, 620 eine Ratenanpassung im Slave 300 vorzunehmen. Dazu kann der Slave das Verhältnis aus dem Takt des Masters und seines eigenen (Rate Ratio, RR, dtsch. Raten-Verhältnis) nach folgender Formel bestimmen: RR = (TM_2 - TM_1) / (TS2_2 - TS2_1). Das Rate Ratio kann durch den Slave bei der Synchronisation in der linearen Interpolationsfunktion auf folgende Art und Weise berücksichtigt werden: tm(ts)= (ts - TS2) * RR + TM - RND. Um den Einfluss von absoluten Fehlern bei der Erfassung der Zeitstempel TM_* und TS* zu minimieren, ist es möglich, den zeitlichem Abstand zwischen den Synchronisationsintervallen 610, 620 möglichst groß zu wählen.

Grundsätzlich ist es möglich, innerhalb eines Netzwerkes mehrere Zeitbasen zwischen Teilnehmern zu synchronisieren. Das bedeutet, dass es grundsätzlich mehrere Master geben kann, die ihre eigene Zeitbasis oder Zeitangabe einem oder mehreren Slave zur Verfügung stellen können. Gleichzeitig kann sich ein Slave auf eine oder mehrere Zeitbasen einer oder mehrerer Master synchronisieren. Die unterschiedlichen Zeitbasen können über ein Feld ''Time Base" innerhalb des Request 320 bzw. der Response 330 identifiziert werden. Es kann sichergestellt sein, dass innerhalb eines Netzwerks die Identifier für die Zeitbasen eineindeutig sind.

Für bestimmte Funktionen ist es unter Umständen nicht zulässig, wenn die synchronisierte Uhr nicht streng monoton steigend ist. Das Stellen der Uhr im Slave 300 auf einen vom Master 310 vorgegebenen Wert (z.B. die Synchronisationszeitangabe) kann jedoch zu einem solchen Sprung führen. Daher kann anstelle einer sprunghaften Korrektur der zu synchronisierenden Uhr nach Erhalt der Response eine allmähliche Korrektur des Synchronisationsfehlers mit Hilfe einer Ratenanpassung erfolgen. Dazu kann der Slave 300 beim Erhalt der Response sowohl die aktuelle Zeit der synchronisierten Uhr nach der linearen Interpolationsfunktion aus dem vorherigen Synchronisationsintervall als auch die aktuelle Zeit der synchronisierten Uhr nach der linearen Interpolationsfunktion aus dem aktuellen Synchronisationsintervall bestimmen. Die Differenz aus diesen beiden Werten stellt z.B. einen zu korrigierenden Synchronisationsfehler E dar, mit E = tm_2(ts) - tm_1 (ts). Anstelle einer sprunghaften Korrektur um den Wert E durch Substituierung von tm_1(ts) durch tm_2(ts), kann eine Erwartungshaltung über den nächsten Synchronisationszeitpunkt gebildet werden, welcher voraussichtlich nach Ablauf einer Zykluszeit T_SYNC stattfinden kann. Der Slave kann das Ziel verfolgen, den zu korrigierenden Synchronisationsfehler E bis zu diesem Zeitpunkt zu eliminieren, etwa gemäß tm_2(ts)= (ts - TS2_2) + TM_2 - RND_2 - E *((ts - TS2_2) / T_SYNC).

Die Erfindung bezieht sich auf ein Verfahren zur Realisierung einer vertrauenswürdigen Zeitsynchronisation über nicht vertrauenswürdige Kommunikationskanäle.

Mit dem Verfahren lassen sich z.B. die Anforderungen (beispielsweise der funktionalen Sicherheit) an die beteiligten Netzwerkkomponenten von z.B. ASIL B auf QM reduzieren und dadurch erhebliche Kosten einsparen. Ein Vorteil kann in der Realisierung einer vertrauenswürdigen Zeitsynchronisation hinsichtlich funktionaler Sicherheit (Safety) und Security bestehen.

Das vorgestellte Verfahren ist universell und kann überall eingesetzt werden, wo eine vertrauenswürdige Zeitsynchronisation benötigt wird. Vertrauenswürdig kann in diesem Zusammenhang z.B. ASIL B tauglich gemäß ISO26262 und sicher gegenüber mutwilliger Manipulation im Sinne der Security bedeuten. Zum Beispiel kann in einem Fahrzeug nicht notwendigerweise davon ausgegangen werden, dass der Kommunikationskanal zwischen den Steuergeräten vertrauenswürdig realisiert werden kann. Dies trifft z.B. auf Ethernet-Netzwerke zu, deren Switches ihre Funktionalität nicht ASIL tauglich realisieren. Eine ASIL B taugliche Umsetzung aller beteiligten Netzwerkkomponenten wäre mit erheblichen Zusatzkosten verbunden. Daher sind unter Umständen keine automobiltauglichen Lösungen entwickelt, die z.B. nach IS026262 zertifiziert sind. Darüber hinaus wäre eine Umsetzung des Kommunikationskanals (Leitungen, Stecker, etc.) in vertrauenswürdiger Güte sehr aufwändig und kostspielig.

Weitere Ausführungsbeispiele sind Computerprogramme zur Durchführung eines der hierin beschriebenen Verfahren, wenn das Computerprogramm auf einem Computer, einem Prozessor, oder einer programmierbaren Hardwarekomponente abläuft. Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Verfahren
- 110: Senden einer Zeitanfrage
- 120: Empfangen einer Zeitantwort
- 130: Bestimmen einer Synchronisationsgenauigkeit
- 200: Kommunikationseinheit
- 210: Kommunikationskanal
- 220: zweite Kommunikationseinheit
- 300: Slave
- 310: Master
- 320: Zeitanfrage
- 330: Zeitantwort
- 340: Response Network Delay
- 350: Rundlaufzeit
- 400: erstes Beispiel
- 450: zweites Beispiel
- 500: erstes Beispiel
- 510: Verweildauer
- 520: maximales Response Network Delay
- 550: zweites Beispiel
- 600: Bestimmung einer Abweichungsrate
- 610: erstes Synchronisationsintervall
- 620: zweites Synchronisationsintervall

## Patentansprüche

1. Verfahren (100) zum Bestimmen einer Synchronisationsgenauigkeit einer Zeitsynchronisation einer ersten Kommunikationseinheit (200, 300), das Verfahren (100) umfassend:
Senden (110) einer Zeitanfrage (320) über einen Kommunikationskanal (210) zu einem korrespondierenden Sendezeitpunkt (TS1) von der ersten Kommunikationseinheit (200, 300) an eine zweite Kommunikationseinheit (220, 310);
Empfangen (120) einer Zeitantwort (330), wobei die Zeitantwort (330) eine Synchronisationszeitangabe der zweiten Kommunikationseinheit (220, 310) umfasst, zu einem korrespondierenden Empfangszeitpunkt (TS2) an der ersten Kommunikationseinheit (200, 300);
Bestimmen (130) der Synchronisationsgenauigkeit basierend auf dem Sendezeitpunkt (TS1) und dem Empfangszeitpunkt (TS2); und
Verwenden der Synchronisationszeitangabe der zweiten Kommunikationseinheit (220, 310) für ein Ausführen einer Funktion der ersten Kommunikationseinheit (200, 300) in Abhängigkeit von der Synchronisationsgenauigkeit,
wobei als Kommunikationskanal (210) ein drahtgebundenes Netzwerk verwendet wird, welches zumindest eine Komponente mit einer Funktionssicherheitsstufe umfasst, die unterhalb einer von der Funktion der ersten Kommunikationseinheit (200, 300) geforderten Funktionssicherheitsstufe liegt, sodass ermittelt werden kann, ob bei einer Zeitsynchronisation über das drahtgebundene Netzwerk eine erforderliche vorbestimmte
Synchronisationsgenauigkeit vorliegt,
**dadurch gekennzeichnet, daß** basierend auf einer Rundlaufzeit zwischen dem Sendezeitpunkt (TS1) und dem Empfangszeitpunkt (TS2) ermittelter Synchronisationsfehler für die Zeitsynchronisation in Abhängigkeit von der auszuführenden Funktion berücksichtigt wird.

2. Verfahren (100) zum Bestimmen einer Synchronisationsgenauigkeit einer Zeitsynchronisation einer ersten Kommunikationseinheit (200, 300), das Verfahren (100) umfassend:
Senden (110) einer Zeitanfrage (320) über einen Kommunikationskanal (210) zu einem korrespondierenden Sendezeitpunkt (TS1) von der ersten Kommunikationseinheit (200, 300) an eine zweite Kommunikationseinheit (220, 310);
Empfangen (120) einer Zeitantwort (330), wobei die Zeitantwort (330) eine Synchronisationszeitangabe der zweiten Kommunikationseinheit (220, 310) umfasst, zu einem korrespondierenden Empfangszeitpunkt (TS2) an der ersten Kommunikationseinheit (200, 300);
Bestimmen (130) der Synchronisationsgenauigkeit basierend auf dem Sendezeitpunkt (TS1) und dem Empfangszeitpunkt (TS2); und
Verwenden der Synchronisationszeitangabe der zweiten Kommunikationseinheit (220, 310) für ein Ausführen einer Funktion der ersten Kommunikationseinheit (200, 300) in Abhängigkeit von der Synchronisationsgenauigkeit,
wobei als Kommunikationskanal (210) ein drahtgebundenes Netzwerk verwendet wird, welches zumindest eine Komponente mit einer Funktionssicherheitsstufe umfasst, die unterhalb einer von der Funktion der ersten Kommunikationseinheit (200, 300) geforderten Funktionssicherheitsstufe liegt, sodass ermittelt werden kann, ob bei einer Zeitsynchronisation über das drahtgebundene Netzwerk eine erforderliche vorbestimmte
Synchronisationsgenauigkeit vorliegt,
**dadurch gekennzeichnet, daß** eine erneute Zeitanfrage (320) gesendet wird, falls die Synchronisationsgenauigkeit geringer ist als eine für die auszuführende Funktion erforderliche Synchronisationsgenauigkeit.

3. Verfahren (100) nach Anspruch 1 oder 2, wobei zum Bestimmen der Synchronisationsgenauigkeit ferner eine Zeitdauer (510) zwischen Empfangen der Zeitanfrage und Senden der Zeitantwort (330) an der zweiten Kommunikationseinheit (220, 310) berücksichtigt wird, die als Verweildauer in die Zeitantwort eingefügt wird, und/oder ein Empfangszeitpunkt der Zeitanfrage und ein Sendezeitpunkt der Zeitantwort berücksichtigt werden, die in die Zeitantwort eingefügt werden.

4. Verfahren (100) nach einem der vorhergehenden Ansprüche, wobei eine Gangungenauigkeit eines Zeitgebers der ersten Kommunikationseinheit (200, 300) gegenüber einem Zeitgeber der zweiten Kommunikationseinheit (220, 310) durch Verwenden einer Abweichungsrate kompensiert wird, wobei die Abweichungsrate basierend auf zumindest einem weiteren Senden einer Zeitanfrage (320) und einem korrespondierenden weiteren Empfangen einer Zeitantwort (330) ermittelt wird.

5. Verfahren (100) nach einem der vorhergehenden Ansprüche, wobei eine Mehrzahl von Zeitanfragen (320) von der ersten Kommunikationseinheit (200, 300) über den Kommunikationskanal (210) zu einer entsprechenden Mehrzahl von Kommunikationseinheiten (220, 310), die zumindest bezüglich eines Sendens der Zeitantwort (330) der zweiten Kommunikationseinheit entsprechend ausgebildet sind, gesendet wird.

6. Verfahren (100) nach einem der vorhergehenden Ansprüche, wobei bei einer Abweichung der Synchronisationszeitangabe der zweiten Kommunikationseinheit (220, 310) von einer Zeitangabe der ersten Kommunikationseinheit (200, 300) eine Anpassung der Zeitangabe der ersten Kommunikationseinheit (200, 300) an die Synchronisationszeitangabe graduell erfolgt.

7. Verfahren (100) nach einem der vorhergehenden Ansprüche, wobei der Zeitanfrage (320) und der Zeitantwort (330) jeweilige Identifikationsmerkmale und/oder Prüfsummen und/oder Signaturen beigefügt werden, durch die eine Zeitantwort (330) einer korrespondierenden Zeitanfrage (320) eindeutig zugeordnet wird.

8. Verfahren (100) nach einem der vorhergehenden Ansprüche, wobei durch Verwenden zumindest eines kryptographischen Verfahrens eine Manipulationssicherheit der Zeitantwort (330) und/oder der Zeitanfrage erhöht wird, wobei die jeweilige Nachricht mit einem kryptographischen Verfahren signiert wird.

9. Computerprogramm zur Durchführung eines Verfahrens (100) gemäß einem der Ansprüche 1 bis 8, wenn das Computerprogramm auf einem Computer, einem Prozessor, oder einer programmierbaren Hardwarekomponente abläuft.

10. Eine Kommunikationseinheit (200, 220, 300, 310) zum Verbinden mit einem Kommunikationskanal (210), wobei die Kommunikationseinheit (200, 220, 300, 310) zumindest einen Zeitgeber umfasst und ferner dazu eingerichtet ist, ein Verfahren gemäß einem der Ansprüche 1 bis 8 auszuführen.

11. Kraftfahrzeug mit zumindest einem Kommunikationskanal (210), wobei das Kraftfahrzeug zumindest eine Kommunikationseinheit (200) gemäß Anspruch 10 umfasst.

## Claims

1. A method (100) for determining a synchronization accuracy of a time synchronization of a first communication unit (200, 300), the method (100) comprising:
sending (110) a time request (320) via a communication channel (210) at a corresponding transmission time (TS1) from the first communication unit (200, 300) to a second communication unit (220, 310);
receiving (120) a time response (330), wherein the time response (330) comprises a synchronization time specification of the second communication unit (220, 310) at a corresponding reception time (TS2) at the first communication unit (200, 300);
determining (130) the synchronization accuracy based on the transmission time (TS1) and the reception time (TS2); and
using the synchronization time specification of the second communication unit (220, 310) for executing a function of the first communication unit (200, 300) depending on the synchronization accuracy,
wherein a wired network is used as the communication channel (210) and comprises at least one component having a functional reliability level that lies below a functional reliability level required by the function of the first communication unit (200, 300) so that it can be determined whether a required predetermined synchronization accuracy is present during time synchronization via the wired network,
**characterized in that** a synchronization error determined based on a round trip time between the transmission time (TS1) and the reception time (TS2) is taken into account for the time synchronization depending on the function to be executed.

2. A method (100) for determining a synchronization accuracy of a time synchronization of a first communication unit (200, 300), the method (100) comprising:
sending (110) a time request (320) via a communication channel (210) at a corresponding transmission time (TS1) from the first communication unit (200, 300) to a second communication unit (220, 310);
receiving (120) a time response (330), wherein the time response (330) comprises a synchronization time specification of the second communication unit (220, 310) at a corresponding reception time (TS2) at the first communication unit (200, 300);
determining (130) the synchronization accuracy based on the transmission time (TS1) and the reception time (TS2); and
using the synchronization time specification of the second communication unit (220, 310) for executing a function of the first communication unit (200, 300) depending on the synchronization accuracy,
wherein a wired network is used as the communication channel (210) and comprises at least one component having a functional reliability level that lies below a functional reliability level required by the function of the first communication unit (200, 300) so that it can be determined whether a required predetermined synchronization accuracy is present during time synchronization via the wired network,
**characterized in that** a new time request (320) is sent if the synchronization accuracy is less than a synchronization accuracy required for the function to be executed.

3. The method (100) according to either claim 1 or claim 2, wherein, for determining the synchronization accuracy, a time period (510) between receiving the time request and sending the time response (330) at the second communication unit (220, 310) is further taken into account and is inserted into the time response as a dwell time, and/or a reception time of the time request and a transmission time of the time response are taken into account, which are inserted into the time response.

4. The method (100) according to any of the preceding claims, wherein a timing inaccuracy of a timer of the first communication unit (200, 300) compared to a timer of the second communication unit (220, 310) is compensated by using a deviation rate, wherein the deviation rate is determined based on at least one further sending of a time request (320) and a corresponding further receiving of a time response (330).

5. The method (100) according to any of the preceding claims, wherein a plurality of time requests (320) are sent from the first communication unit (200, 300) via the communication channel (210) to a corresponding plurality of communication units (220, 310) which are accordingly configured at least with respect to sending the time response (330) of the second communication unit.

6. The method (100) according to any of the preceding claims, wherein, in the event of a deviation of the synchronization time specification of the second communication unit (220, 310) from a time specification of the first communication unit (200, 300), the time specification of the first communication unit (200, 300) is gradually adapted to the synchronization time specification.

7. The method (100) according to any of the preceding claims, wherein the time request (320) and the time response (330) are accompanied by relevant identification features and/or checksums and/or signatures by which a time response (330) is uniquely assigned to a corresponding time request (320).

8. The method (100) according to any of the preceding claims, wherein a manipulation security of the time response (330) and/or the time request is increased by using at least one cryptographic method, wherein the relevant message is signed with a cryptographic method.

9. A computer program for carrying out a method (100) according to any of claims 1 to 8 when the computer program runs on a computer, a processor, or a programmable hardware component.

10. A communication unit (200, 220, 300, 310) for connecting to a communication channel (210), wherein the communication unit (200, 220, 300, 310) comprises at least one timer and is further configured to execute a method according to any of claims 1 to 8.

11. A motor vehicle having at least one communication channel (210), wherein the motor vehicle comprises at least one communication unit (200) according to claim 10.

## Revendications

1. Procédé (100) permettant de déterminer une précision de synchronisation d'une synchronisation temporelle d'une première unité de communication (200, 300), le procédé (100) comprenant :
l'envoi (110) d'une demande temporelle (320) par l'intermédiaire d'un canal de communication (210) à un moment d'envoi (TS1) correspondant de la première unité de communication (200, 300) à une seconde unité de communication (220, 310) ;
la réception (120) d'une réponse temporelle (330), dans lequel la réponse temporelle (330) comprend une indication temporelle de synchronisation de la seconde unité de communication (220, 310), à un moment de réception (TS2) correspondant sur la première unité de communication (200, 300) ;
la détermination (130) de la précision de synchronisation sur la base du moment d'envoi (TS1) et du moment de réception (TS2) ; et
l'utilisation de l'indication temporelle de synchronisation de la seconde unité de communication (220, 310) pour une exécution d'une fonction de la première unité de communication (200, 300) en fonction de la précision de synchronisation,
dans lequel un réseau sur fil est utilisé comme canal de communication (210), lequel réseau sur fil comprend au moins un composant avec un niveau de sécurité fonctionnelle inférieur à un niveau de sécurité fonctionnelle exigé par la fonction de la première unité de communication (200, 300), de sorte qu'il peut être défini si une précision de synchronisation prédéterminée requise est présente ou non lors d'une synchronisation temporelle par l'intermédiaire du réseau sur fil,
**caractérisé en ce que,** sur la base d'une durée de cycle entre le moment d'envoi (TS1) et le moment de réception (TS2), une erreur de synchronisation définie pour la synchronisation temporelle est prise en compte en fonction de la fonction à exécuter.

2. Procédé (100) permettant de déterminer une précision de synchronisation d'une synchronisation temporelle d'une première unité de communication (200, 300), le procédé (100) comprenant :
l'envoi (110) d'une demande temporelle (320) par l'intermédiaire d'un canal de communication (210) à un moment d'envoi (TS1) correspondant de la première unité de communication (200, 300) à une seconde unité de communication (220, 310) ;
la réception (120) d'une réponse temporelle (330), dans lequel la réponse temporelle (330) comprend une indication temporelle de synchronisation de la seconde unité de communication (220, 310), à un moment de réception (TS2) correspondant sur la première unité de communication (200, 300) ;
la détermination (130) de la précision de synchronisation sur la base du moment d'envoi (TS1) et du moment de réception (TS2) ; et
l'utilisation de l'indication temporelle de synchronisation de la seconde unité de communication (220, 310) pour une exécution d'une fonction de la première unité de communication (200, 300) en fonction de la précision de synchronisation,
dans lequel un réseau sur fil est utilisé comme canal de communication (210), lequel réseau sur fil comprend au moins un composant avec un niveau de sécurité fonctionnelle inférieur à un niveau de sécurité fonctionnelle exigé par la fonction de la première unité de communication (200, 300), de sorte qu'il peut être défini si une précision de synchronisation prédéterminée requise est présente ou non lors d'une synchronisation temporelle par l'intermédiaire du réseau sur fil,
**caractérisé en ce qu'**une nouvelle demande temporelle (320) est envoyée si la précision de synchronisation est inférieure à une précision de synchronisation requise pour la fonction à exécuter.

3. Procédé (100) selon la revendication 1 ou 2, dans lequel une durée (510) entre la réception de la demande temporelle et l'envoi de la réponse temporelle (330) à la seconde unité de communication (220, 310) est en outre prise en compte pour la détermination de la précision de synchronisation, laquelle durée est incluse comme temps d'attente dans la réponse temporelle, et/ou un moment de réception de la réponse temporelle et un moment d'envoi de la réponse temporelle sont pris en compte, lesquels sont inclus dans la réponse temporelle.

4. Procédé (100) selon l'une des revendications précédentes, dans lequel une inexactitude de précision d'une horloge de la première unité de communication (200, 300) par rapport à une horloge de la seconde unité de communication (220, 310) est compensée en utilisant un taux de déviation, dans lequel le taux de déviation est défini sur la base d'au moins un autre envoi d'une demande temporelle (320) et d'une autre réception correspondante d'une réponse temporelle (330).

5. Procédé (100) selon l'une des revendications précédentes, dans lequel une pluralité de demandes temporelles (320) sont envoyées par la première unité de communication (200, 300) par l'intermédiaire du canal de communication (210) à une pluralité correspondante d'unités de communication (220, 310) configurées de manière correspondante au moins en ce qui concerne un envoi de la réponse temporelle (330) de la seconde unité de communication.

6. Procédé (100) selon l'une des revendications précédentes, dans lequel, en cas d'écart entre l'indication temporelle de synchronisation de la seconde unité de communication (220, 310) et une indication temporelle de la première unité de communication (200, 300), une adaptation de l'indication temporelle de la première unité de communication (200, 300) à l'indication temporelle de synchronisation est effectuée progressivement.

7. Procédé (100) selon l'une des revendications précédentes, dans lequel des caractéristiques d'identification et/ou des totaux de contrôle et/ou des signatures respectifs sont joints à la demande temporelle (320) et à la réponse temporelle (330), grâce auxquels une réponse temporelle (330) est affectée de manière univoque à une demande temporelle (320) correspondante.

8. Procédé (100) selon l'une des revendications précédentes, dans lequel une sécurité de manipulation de la réponse temporelle (330) et/ou de la demande temporelle est augmentée en utilisant au moins un procédé cryptographique, dans lequel le message respectif est signé avec un procédé cryptographique.

9. Programme informatique permettant l'exécution d'un procédé (100) selon l'une des revendications 1 à 8, lorsque le programme informatique est lancé sur un ordinateur, un processeur ou un composant matériel programmable.

10. Unité de communication (200, 220, 300, 310) destinée à se connecter à un canal de communication (210), dans laquelle l'unité de communication (200, 220, 300, 310) comprend au moins une horloge et est en outre configurée pour exécuter un procédé selon l'une des revendications 1 à 8.

11. Véhicule automobile comportant au moins un canal de communication (210), dans lequel le véhicule automobile comprend au moins une unité de communication (200) selon la revendication 10.
